# EUROPÄISCHE PATENTANMELDUNG

(11) **EP 1 496 550 A2**
(43) Veröffentlichungstag der Anmeldung: **12.01.2005**
(21) Anmeldenummer: 04015050.0
(22) Anmeldetag: 26.06.2004
(51) Int. Cl.: H01L 31/042

(54) **Montagesystem für gerahmte Photovoltaikmodule**

(30) Priorität: 11.07.2003 DE 20310760 U
(71) Anmelder: SCHÜCO International KG, 33609 Bielefeld (DE)
(72) Erfinder: Brand, Holger, 33613 Bielefeld (DE); Böhning, Holger, 33609 Bielefeld (DE); Imkamp, Gerd, 33334 Gütersloh (DE); Körner, Thomas, 32052 Herford (DE); Rosenwirth, Andreas, 32130 Enger (DE); Thole, Frank, 33739 Bielefeld (DE); Wiggers, Melanie, 32657 Lemgo (DE); Sillmann, Roland, 33615 Bielefeld (DE)
(74) Vertreter: Dantz, Jan Henning

(57) **Zusammenfassung**

Ein Montagesystem (1), insbesondere für die Befestigung von gerahmten Photovoltaikmodulen, umfasst einen Rahmen (3), in dem ein plattenförmiges Modulelement (2) eingefasst ist, wobei der Rahmen (3) an mindestens zwei Tragschienen (4) abgestützt ist. Erfindungsgemäß ist das Modulelement (2) zusätzlich innerhalb des Rahmens (3) an ein oder mehreren Stellen abgestützt. Dadurch lässt sich die Durchbiegung des Modulelementes (2) begrenzen, sodass die Baugröße des Modulelementes erhöht werden kann und die Bruchgefahr minimiert wird.

## Beschreibung

Die vorliegende Erfindung betrifft ein Montagesystem, insbesondere für die Befestigung von gerahmten Photovoltaikmodulen, mit einem Rahmen, in dem ein plattenförmiges Modulelement eingefasst ist, wobei der Rahmen an mindestens zwei Tragschienen abgestützt ist.

Es gibt Montagesysteme für Photovoltaikmodule, die von einem Rahmen eingefasst sind, wobei der Rahmen auf Profilschienen montiert ist, die an einem Dach oder einer Fassade festgelegt sind. Solche Photovoltaikmodule bestehen üblicherweise aus mehrschichtigen Platten, also Photovoltaikelementen, einer Glasscheibe und einer unteren Abdeckung, und werden meist auf Dächern befestigt. Ein solches Photovoltaikmodul unterliegt einer gewissen Durchbiegung innerhalb des Rahmens. Deshalb ist ab einer bestimmten Größe die Bruchgefahr, insbesondere der Glasscheibe, relativ groß, sodass aus Sicherheitsgründen eine maximale Baugröße für die plattenförmigen Photovoltaikmodule nicht überschritten werden darf. Die Baugröße kann lediglich durch dickere Glasscheiben variiert werden, wodurch jedoch die Kosten für das Modulelement und dessen Gewicht steigen. Insbesondere in Ländern mit kälteren klimatischen Bedingungen, wie beispielsweise Österreich und der Schweiz, sind die maximalen Baugrößen aufgrund von zu berücksichtigenden Schneelasten nur relativ gering.

Es ist daher Aufgabe der vorliegenden Erfindung ein Montagesystem zur Verfügung zu stellen, mit dem relativ große Modulelemente in einen Rahmen eingefasst werden können, wobei auch bei Schneelasten eine Sicherheit gegen Bruch gegeben ist.

Diese Aufgabe wird mit einem Montagesystem mit den Merkmalen des Anspruches 1 gelöst.

Erfindungsgemäß ist das Modulelement innerhalb des Rahmens an ein oder mehreren Stellen abgestützt. Dadurch lässt sich die Durchbiegung des Modulelementes auch bei großen Flächen begrenzen, sodass die Bruchgefahr minimiert wird. Dadurch kann die Baugröße des Modulelementes erhöht werden und für das Belegen einer Dachfläche sind im Verhältnis weniger Rahmen erforderlich.

Vorzugsweise ist das Modulelement durch ein Montageelement abgestützt, das an den Tragschienen festgelegt ist. Dadurch kann an einer an sich bekannten Konstruktion mit Tragschienen das neue Montagesystem problemlos befestigt werden. Das Montageelement kann dabei in einfacher Weise auf die Tragschiene aufgesteckt werden, sodass die Montage einfach auszuführen ist. Für eine gute Abstützung des Montageelementes erstreckt sich dieses vorzugsweise parallel der Tragschiene und ist auf derselben angeordnet.

Um das Montageelement an der Tragschiene leicht montieren zu können, sind vorzugsweise an dem Montageelement Rastelemente vorgesehen, die mit Rastmitteln an den Tragschienen verbindbar sind.

Um eine Beschädigung des Modulelementes innerhalb des Rahmens zu vermeiden, kann dieses auf elastischen Dichtungsprofilen aufliegen, die an dem Montageelement gehalten sind. Insofern wird ein Kontakt zwischen zwei harten Materialien vermieden. Ferner ist es möglich, mit den Dichtungsprofilen, beispielsweise Glasanlagedichtungen unterschiedlich stark aufbauende Modulelemente, beispielsweise zwischen 3 und 20 Millimeter einzusetzen. Hierdurch ist es möglich, die Höhendifferenz durch unterschiedlich hohe Photovoltaikmodule oder durch unterschiedlich aufbauende Modulrahmen auszugleichen.

Für das Abstützen ist es ausreichend, wenn die Montageelemente sich nur über einen Abschnitt innerhalb des Modulelementes, beispielsweise nur mittig erstrecken.

Die Montageelemente können auch mit den Modulelementen verklebt, beispielsweise mit Silikon, oder mit mechanischen Befestigungsmitteln verbunden werden. Hierdurch ergibt sich der zusätzliche Nutzen, dass auch auf das Modulelement wirkende Sogkräfte aufgenommen werden.

Für eine ausreichende Festigkeit kann das Montageelement durch ein Aluminiumstrangpressprofil gebildet sein, dass in beliebiger Länge abtrennbar ist. Dabei kann das Montageelement auch dieselbe Breite wie die Tragschiene aufweisen, sodass der von unten sichtbare Abschnitt der Tragschiene nicht vergrößert wird.

Die Erfindung wird nachfolgend anhand eines Ausführungsbeispieles mit Bezug auf die beigefügten Zeichnungen näher erläutert. Es zeigen:
- Figur 1: eine schematische Draufsicht auf ein erfindungsgemäßes Montagesystem;
- Figur 2: eine schematische Seitenansicht auf das Montagesystem der Figur 1 ohne Montageelemente;
- Figur 3: eine schematische Seitenansicht des Montagesystems der Figur 1 mit Montageelementen;
- Figur 4: eine Schnittansicht durch eine Tragschiene mit einem Montageelement, und
- Figur 5: eine Querschnittsansicht des Montageelementes der Figur 4.

Ein Montagesystem 1 umfasst ein Modulelement 2 in Form eines Photovoltaikmoduls, das aus mehreren Schichten, beispielweise mit Photovoltaikelementen, einer Glasscheibe und einer unteren Abdeckung, sandwichartig aufgebaut ist. Das Modulelement 2 ist in einem umlaufenden Rahmen 3 eingefasst, wobei der Rahmen 3 eine etwas größere Höhe besitzt als das Modulelement 2. Der Rahmen 3 liegt auf zwei Tragschienen 4 auf, die beabstandet voneinander parallel verlaufen. Die Tragschienen 4 können auf einem Dachstuhl befestigt sein und es können auch mehr als zwei Tragschienen 4 zum Einsatz kommen. Ferner können die Tragschienen 4 vertikal, horizontal oder geneigt angeordnet sein.

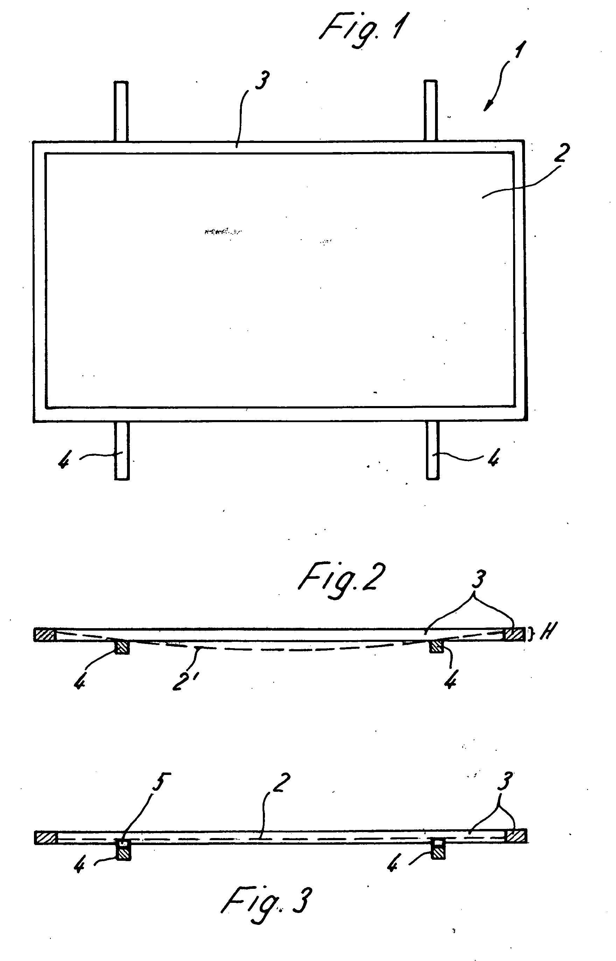

Wie in Figur 2 gezeigt ist, liegt der Rahmen 3 auf den Tragschienen 4 auf und kann dort über bekannte Befestigungsmittel montiert sein. Das Modulelement 2 besitzt eine geringere Höhe als die Höhe H des Rahmens 3 und biegt sich ohne Abstützung nach unten durch, wie dies mit den gestrichelten Linien dargestellt ist. Das so durchhängende Modulelement 2' gemäß dem Stand der Technik kann leicht brechen, wobei die maximale Durchbiegung begrenzt ist.

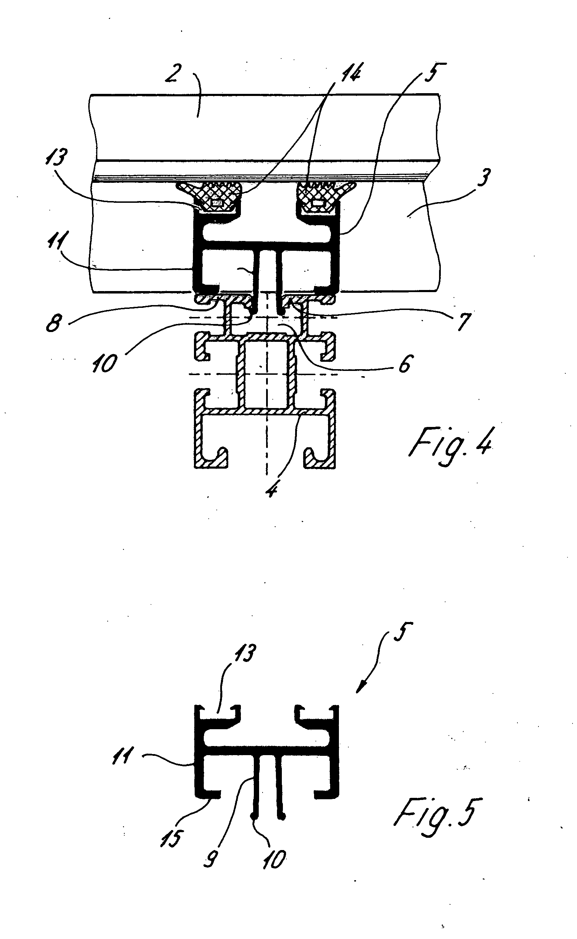

Wie in Figur 3 zu sehen ist, lässt sich die Durchbiegung mittels erfindungsgemäßer Montageelemente 5 zumindest verringern. Die Montageelemente 5 sind an den Tragschienen 4 festgelegt und erstrecken sich zumindest über einen Teil der Länge der Tragschienen 4 innerhalb des Rahmens 3. Das Modulelement 2 liegt auf den Montageelementen 5 auf und der Abstand zwischen zwei Auflagepunkten am Rahmen bzw. den Montageelementen 5 verringert sich derart, dass die Durchbiegung fast vermieden wird. Es ist auch möglich, die Montageelemente 5 über die gesamte Länge innerhalb des Rahmens 3 verlaufen zu lassen oder nur punktuell an einzelnen Stellen an den Tragschienen 4 festzulegen. Ferner können die Montageelemente 5 auch winklig zu den Tragschienen 4, beispielsweise zwischen zwei Tragschienen 4 montiert sein.

Wie in Figur 4 gezeigt ist, wird die Tragschiene 4 aus einem extrudierten Profil gebildet, an dem ein Montageelement 5 als Strangpressprofil aus Aluminium oder Kunststoff montiert ist.

Die Tragschiene 6 weist eine hinterschnittene Nut 6 auf, an der seitlich nach innen hervorstehende Stege 7 ausgebildet sind. Ferner sind nach außen gerichtete Stege 8 vorgesehen, an denen der Rahmen 3 an der Unterseite abgestützt ist. In die Nut 6 greifen zwei elastische Stege 9 an dem Montageelement 5 ein, die einen verdickten Kopfabschnitt 10 besitzen. Das Montageelement 5 lässt sich somit an der Tragschiene 4 verrasten, indem die verdickten Kopfabschnitte 10 in die hinterschnittene Nut 6 klemmend eingefügt werden.

Das Montageelement 5 besitzt ferner zwei seitlich abgekantete Stege 11, die auf den Stegen 8 der Tragschiene 4 aufliegen.

An der nach oben gerichteten Seite sind zwei Nuten 13 vorgesehen, die sich parallel zu der Tragschiene 4 erstrecken. In die Nuten 13 sind Glasanlagedichtungen 14 eingefügt, die mit einem Dichtungsfuß in den Nuten 13 festgelegt sind. Die elastischen Dichtungselemente 14 können je nach Bedarf eine unterschiedliche Höhe aufweisen und sind vorzugsweise als übliche Glasanlagedichtungen aus EPDM gebildet. Durch die Dichtelemente 14 können unterschiedlich hohe Rahmen 3 sowie unterschiedlich dicke Modulelemente 2 eingesetzt werden, da mittels der Dichtelemente 14 ein Höhenausgleich vorgenommen werden kann.

In Figur 5 ist das Montageelement 5 ohne Dichtelemente im Detail dargestellt. Die Stege 9 stehen seitlich über die Stege und die abgekantete Fläche 15 hervor und können somit in die Nut 6 an der Tragschiene 4 eingreifen.

In dem dargestellten Ausführungsbeispiel ist ein offenes Hohlprofil als Montageelement vorgesehen, das in beliebiger Länge abgeschnitten und an einer Tragschiene 4 festgelegt werden kann. Es ist auch möglich, andere Montageelemente, beispielsweise geschlossene Hohlprofile, Vollprofile oder andere Bauelemente einzusetzen. Ferner ist es möglich für die Befestigung der Montageelemente an den Tragschienen andere Befestigungsmittel einzusetzen. Statt der leistenförmigen Anlageflächen durch die streifenförmigen Dichtelemente ist es möglich, runde Dichtelemente für eine eher punktuelle Auflage vorzusehen.

## Patentansprüche

1. Montagesystem (1), insbesondere für die Befestigung von gerahmten Photovoltaikmodulen, mit einem Rahmen (3), in dem ein plattenförmiges Modulelement (2) eingefasst ist, wobei der Rahmen (3) an mindestens zwei Tragschienen (4) abgestützt ist, **dadurch gekennzeichnet, dass** das Modulelement (2) innerhalb des Rahmens (3) an ein oder mehreren Stellen abgestützt ist.

2. Montagesystem nach Anspruch 1, **dadurch gekennzeichnet, dass** das Modulelement (2) durch ein Montageelement (5) abgestützt ist, das an den Tragschienen (4) festgelegt ist.

3. Montagesystem nach Anspruch 2, **dadurch gekennzeichnet, dass** das Montageelement (5) auf die Tragschiene (4) aufsteckbar ist.

4. Montagesystem nach einem der Ansprüche 1 bis 3, **dadurch gekennzeichnet, dass** das Montageelement (5) parallel zu und auf der Tragschiene (4) angeordnet ist.

5. Montagesystem nach einem der Ansprüche 1 bis 4, **dadurch gekennzeichnet, dass** an dem Montageelement (5) Rastelemente (9, 10) vorgesehen sind, die mit Rastmitteln (6, 7) an den Tragschienen (4) verbindbar sind.

6. Montagesystem nach einem der Ansprüche 1 bis 5, **dadurch gekennzeichnet, dass** das Modulelement (2) innerhalb des Rahmens (3) auf elastischen Dichtungsprofilen (14) aufliegt, die an dem Montageelement (5) gehalten sind.

7. Montagesystem nach einem der Ansprüche 1 bis 6, **dadurch gekennzeichnet, dass** die Montageelemente (5) sich nur über einen Abschnitt innerhalb des Modulelementes (2) erstrecken.

8. Montagesystem nach einem der Ansprüche 1 bis 7, **dadurch gekennzeichnet, dass** das Montageelement (5) durch ein Aluminiumstrangpressprofil gebildet ist.

9. Montagesystem nach einem der Ansprüche 1 bis 8, **dadurch gekennzeichnet, dass** das Montageelement (5) etwa dieselbe Breite aufweist, wie die Tragschiene (4).
